(19) Europäisches Patentamt
European Patent Office
Office européen des brevets

(11) Publication number: **0 155 310**
**B1**

(12) # EUROPEAN PATENT SPECIFICATION

(45) Date of publication of patent specification: **27.04.88**

(51) Int. Cl.$^4$: **H 01 M 8/14**

(21) Application number: **84903501.9**

(22) Date of filing: **18.07.84**

(86) International application number:
**PCT/US84/01113**

(87) International publication number:
**WO 85/00697 14.02.85 Gazette 85/04**

(54) **IMPROVED SILICON CARBIDE MATRIX FOR FUEL CELLS.**

(30) Priority: **21.07.83 US 516152**

(43) Date of publication of application:
**25.09.85 Bulletin 85/39**

(45) Publication of the grant of the patent:
**27.04.88 Bulletin 88/17**

(84) Designated Contracting States:
**DE FR GB**

(56) References cited:
**DE-A-2 514 919**
**US-A-4 007 058**
**US-A-4 017 664**
**US-A-4 035 551**

(73) Proprietor: **UNITED TECHNOLOGIES CORPORATION**
**United Technologies Building 1, Financial Plaza**
**Hartford, CT 06101 (US)**

(72) Inventor: **TROCCIOLA, John, Charles**
**146 Carriage Drive**
**Glastonbury, CT 06033 (US)**
Inventor: **POWERS, Joseph**
**26 Spring Street**
**Riverside, CT 06878 (US)**
Inventor: **MARTIN, Ronald, George**
**East Hill Road**
**Monson, MA 01057 (US)**

(74) Representative: **Bleyer, Jean et al**
**OFFICE DENNEMEYER S.à.r.l. P.O. Box 1502**
**L-1015 Luxembourg (LU)**

**EP 0 155 310 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to an electrolyte retaining matrix for a fuel cell in line with the pre-characterized portion of claim 1. Such electrolyte retaining matrix is known from US—A—4017664.

One type of fuel cell which is known in the art is a fuel cell using liquid phosphoric acid as the electrolyte. The electrolyte is retained in a matrix disposed between a pair of gas diffusion electrodes. Typically, a hydrogen containing gas is used as the fuel and an oxygen containing gas, such as air, is used as the oxidant. The electrodes may include a layer of platinum or platinum alloy catalyst disposed on the surface thereof adjacent to the matrix.

In order for the electrolyte retaining matrix to perform satisfactorily in this type of cell it must have the following properties: (1) it must be porous and have good liquid permeability; (2) it must be wettable to the electrolyte and provide good ionic conductivity; (3) it must be an electronic insulator; (4) it must be chemically stable in the phosphoric acid electrolyte at fuel cell operating temperatures and an electrode open circuit potentials such that even after many thousands of hours (preferably at least 40,000 hours) of operation there is no significant generation of by product materials that will poison the catalyst; (5) it must provide a bubble pressure sufficient to prevent reactant gas crossover through the matrix; and (6) it must have structural integrity throughout its required life; and (7) it should be as thin as possible yet still provide all of the foregoing properties.

The best matrix material of the prior art for use in phospheric acid fuel cells is silicon carbide. A silicon carbide matrix for fuel cells is described in commonly owned US—A—4,017,644, which is incorporated herein by reference. As set forth therein, fuel cells have been constructed and operated using a 100 percent silicon carbide matrix. However, the SiC tends to shift around within the cell so that a uniform layer is difficult to maintain, thereby causing a reduction in cell performance. It has, therefore, been necessary to mix the silicon carbide with a binder which is compatible with phosphoric acid. The binder disclosed in the '644 patent is a fluorocarbon polymer such as polytetrafluoroethylene (PTFE) or fluorinated ethylene propylene (FEP). It is taught that only the minimum amount of binder should be used because both PTFE and FEP are hydrophobic, and increased quantities increase the hydrophobicity of the matrix, which is undesirable. Thus, the '664 patent specifies that the matrix should comprise no more than ten percent binder, and preferably only between two and five percent binder, the balance being silicon carbide.

The binder, of course, provides structural integrity to the matrix. Therefore, in the prior art, matrix strength had to be sacrificed to assure adequate wettability of the silicon carbide. Up to the present time it has not been known how to improve matrix properties, such as structural integrity, wettability, and bubble pressure without sacrificing one or more desirable properties in the process.

Other patents of interest as regards electrolyte retaining matrices for fuel cells are: US—A—3,861,963 (a coated or impregnated polysulfone separator for base electrolyte fuel cells); US—A—3,379,573 (treated PTFE as a matrix in base electrolyte fuel cells); US—A—3,651,030 (polysulfones treated to make them wettable for use as a matrix in alkaline electrolyte fuel cells), and US—A—4007 058 (Fibrous separator matrix for fuel cells made from polyethersulfone).

A principle object of the present invention is an electrolyte retaining matrix for a fuel cell. According to the invention an electrolyte retaining matrix having improved strength and good wettability and bubble pressure characteristics is achieved in line with the features of the characterizing portion of claim 1.

Other improvements in the electrolyte retaining matrix of the invention are achieved by means of the features set forth in the characterizing portions of the sub-claims.

Thus a fuel cell matrix of the invention consists essentially of silicon carbide with polyethersulfone (PES) as a binder.

Polyethersulfone, as that term is used herein and in the claims, is an organic polymer comprising at least two-thirds, by molecular weight, the following repeating unit:

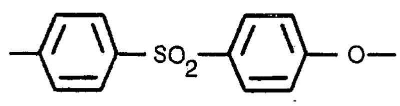

The $SO_2$ linkage is known as a sulfone group, and the oxygen linkage is an ether group. Both the sulfone and ether groups have been discovered to be significantly more corrosion resistant to phosphoric acid as compared, for example, to sulfur groups linked directly to aryl groups

(i.e. 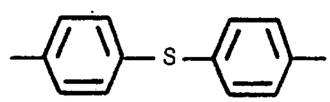 )

or arly groups linked directly to other aryl groups

(i.e. 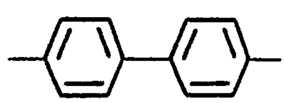 ).

While the definition of polyethersulfone set forth herein does not exclude, for example, such sulfur and aryl groups, it does limit them to amounts which could be acceptable for some applications (perhaps lower temperature and shorter term applications). Most preferably, the polyethersulfone consists essentially only of the ethersulfone repeating unit identified above.

In contradistinction to the fluorocarbon polymer binders suggested by the prior art (e.g. polytetrafluoroethylene and fluorinated ethylene propylene), PES is hydrophilic (i.e. wettable by

liquid water). In view of this fact, coupled with the stability of PES in phosphoric acid at temperatures up to at least 190° C (375 degrees F) it has been found that PES can be used in proportionately larger amounts as a binder for a silicon carbide matrix without impairing the wettability characteristics of the matrix while significantly improving its strength and bubble pressure.

The foregoing and other subjects, features and advantages of the present invention will become more apparent in the light of the following detailed description of preferred embodiments thereof as shown in the accompanying drawings.

Figure 1 is a cross-sectional view of part of a fuel cell stack showing several adjacent fuel cells each incorporating a matrix in accordance with the teachings of the present invention.

Figure 2 is a graph comparing acid wicking capabilities of the matrices of the present invention with those of the prior art.

The fuel cell stack is generally designated by the numeral 10. Each stack 10 is comprised of a plurality of fuel cells 12 separated by gas separator plates 14. Each cell 12 includes an electrolyte retaining matrix layer 16 having an anode electrode 18 disposed on one side thereof and a cathode electrode 20 disposed on the other side thereof. The electrodes are gas diffusion electrodes which are well known in the fuel cell art. The present invention is not intended to be limited to any particular composition or construction of such electrodes.

The anode electrode 18 comprises a substrate 22 having ribs 24 extending thereacross (parallel to the plane of the paper as shown in the drawing) and a catalyst layer 26 disposed in the flat, non-ribbed side 27 thereof. The cathode electrode 20 includes a substrate 28 having ribs 30 extending thereacross on one side thereof (perpendicular to the plane of the paper) and a catalyst layer 32 disposed on the non-ribbed side 31 thereof. The ribs 24, 30 of the anode and cathode electrode substrates abut the separator plates 14 and form reactant gas channels 34 on each side of the separator plates 14. The matrix layer 16 has phosphoric acid electrolyte disposed therein.

In accordance with the present invention, the matrix layer 16 is a combination of silicon carbide and polyethersulfone. The silicon carbide may be in the form of either particles of fibers with particles being preferred due to their lower cost. The PES preferably has a number average molecular weight of at least 17,000, with a number average molecular weight of at least 25,000 being most preferred for corrosion resistance and better strength at the higher temperature. The PES binds the silicon carbide particles together and provides the structural integrity for the matrix. The greater the proportion of PES, the stronger the matrix. The matrix characteristics which limits the amount of PES which may be used is porosity. Since porosity of the matrix is directly related to the amount of electrolyte which it can store, high porosity is desirable. To enable the fabrication of matrices which are very thin, and also have adequate electrolyte storage capability, it is preferred that the porosity of the matrix be no less than about 38 percent. This corresponds to a matrix containing about 30 weight percent PES and 70 weight percent silicon carbide. The silicon carbide/PTFE matrix of the prior art preferably contains no more than about five percent (by weight) PTFE in order to have good wettability properties; yet, at those low amounts, the matrix is not as strong as desirable. Since PES is hydrophilic, acceptable wettability characteristics of the matrix can be obtained despite using a much higher proportion of PES to silicon carbide. Alternatively, the same proportion of PES to silicon carbide as PTFE to silicon carbide could be used, and the matrix would have improved wettability and therefore (probably) also improve bubble pressure. It is believed strength would also be improved since, weight for weight, PES is a better binder than fluorocarbon polymers.

Silicon carbide/PTFE matrices of the prior art containing about 4 weight percent PTFE have a porosity of about 52 percent. The same porosity can be obtained in a matrix of the present invention comprising about 20 weight percent PES and 80 weight percent silicon carbide. A matrix having about 10 percent PES and 90 percent silicon carbide would have a porosity of almost 60 percent. Thus, large amounts of PES may be used in the matrices of the present invention to obtain good strength, without sacrificing porosity or wettability. However, because silicon carbide has better corrosion resistance to phosphoric acid than does PES, (or any other known binder, for that matter), the addition of PES adversely affects long term matrix stability. For this reason it is preferred, although not required, to limit the amount of PES to 20 weight percent.

Another advantageous property of PES is that, in contrast to PTFE, it is dissolvable in many types of solvents, such as methylene chloride. When PES is dissolved in a solvent and mixed with silicon carbide particles, it coats the particles and is uniformly dispersed throughout the matrix. This uniform dispersion of PES and the fact that PES is wettable results in the phosphoric acid electrolyte becoming more uniformly distributed throughout the matrix, and more acid can thereby be held by the matrix. This also contributes to improved bubble pressure. Tests were conducted on five 178 mm (7 mil) thick matrices consisting of silicon carbide with 10 weight percent PES, (the PES consisted entirely of ethersulfone linkages

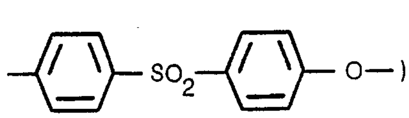

The average bubble pressure for those five tests was 1.77 bar (25.7 psi). For purposes of comparison, a 178 mm (7 mil) thick prior art matrix consisting of silicon carbide with three weight

percent PTFE was tested and had a bubble pressure of only 1.14 bar (16.5 psi).

The non-wettability of PTFE makes the silicon carbide/PTFE matrix considerably more difficult to fill or refill with electrolyte. The improvement provided by the present invention is demonstrated by the test results displayed in Fig. 2. The testing represented by Fig. 2 involved filling a glass tube with the matrix material to be tested and immersing one end of the vertically held tube in 96 percent $H_3PO_4$. The wicking distance was then measured over time. The matrix material in each case was silicon carbide plus the binder indicated on the curve in terms of its weight percent. The PES used consisted entirely of ethersulfone repeating units. The PES/SiC matrices were all heat treated at 288° C (550° F) for 20 minutes. The PTFE/SiC matrices were heat treated at 316° C (600° F) (curve A) and 299° C (570° F) (curve B).

Referring to the graph, although silicon carbide itself (i.e. 100 percent silicon carbide) has good wicking or filling characteristics, such characteristics were improved by the addition of 10 and 20 weight percent PES. Even though the addition of 5 and 30 weight percent PES resulted in reduced wicking capability as compared to 100 percent silicon carbide, silicon carbide with as little as 4 weight percent PTFE had significantly poorer wicking capabilities than any of the silicon carbide/PES samples tested, and it is known that PTFE in amounts greater than 4 percent will have even poorer wicking properties.

Based upon consideration of all the various desirable properties of matrices for phosphoric acid fuel cells and how different proportions of PES to SiC affect such properties, it has been determined that matrices consisting of silicon carbide and at least 10 weight percent PES are preferred, with 10 to 20 weight percent PES being most preferred.

The following example describes how to make a matrix layer comprising 90 percent silicon carbide and 10 percent polyethersulfone. The silicon carbide of this example is a powder which may be purchased from the Carburundum Company under the designation Green 1000 Grit. The polyethersulfone resin is a powder purchased from ICI Americas Inc. (the U.S. operating company of Imperial Chemical Industries Limited) and is their 600P grade PES having a designation of KM-1 and consisting entirely of ethersulfone repeating units. It has a number average molecular weight of between 25,000 and 27,000. In the example the matrix material was formed into an "ink" suitable for curtain coating in accordance with the teachings of commonly owned US—A—4,173,662 which is incorporated herein by reference.

Example

Immediately before using the PES, it was dried in a 149° C (300° F) oven for about two hours to assure that it was moisture free. 100 grams of the dried PES resin was dissolved in 400 grams of methylene chloride ($CH_2C1_2$). In a separate container, 900 grams of the silicon carbide was mixed with 500 grams of methylene chloride. The PES/methylene chloride mixture was then added to the silicon carbide/methylene chloride mixture. The combination was stirred until well mixed. This mixture was poured onto a polytetrafluoroethylene sheet and was spread to form a thin layer which was allowed to dry overnight at room temperature to remove most of the methylene chloride. This layer was broken up into flakes and chopped in a blender into fine powder. 960 grams of this fine powder was blended with 625 grams of distilled water and 175 grams of a 2 percent polyethylene oxide solution having a viscosity of about 640 centipoise. The blended mixture was covered and allowed to sit overnight. 2.7 grams of Triton X-100, a surfactant sold by the DuPont Company, was added to this mixture and mixed well for 45 minutes. The resulting mixture, having a Brookfield viscosity of about 550 centipoise, is now ready to be applied by curtain coating (or other means) onto, for example, the platinum catalyzed surface of gas diffusion electrodes in accordance with aforementioned U.S. Patent 4,173,662. The coated electrode would then be dried at room temperataure and then heat treated to remove water, polyethylene oxide, residual methylene chloride, and Triton X-100 surfactant and to sinter (i.e. partially melt) the PES binder. A typical heat treatment is 288° C (550° F) for 20 minutes.

A 5.08 cm (two inch) by 5.08 cm (two inch) test cell incorporating a 152 to 178 mm (6 to 7 mil) thick 90 percent silicon carbide/10 percent PES matrix made essentially in accordance with the method of the above example (except the ink was applied to the electrodes by dipping rather than curtain coating) was run for 17,000 hours at 190° C (375° F) with no sign of performance decay any worse than silicon carbide/PTFE matrices of the prior art. After 16,000 hours there was no sign of catalyst poisoning, as evidenced by the lack of any significant change in cathode catalyst specific activity, for oxygen reduction, at between .8 and .9 volt. Additionally, there was no indication of any anode poisons as measured by the hydrogen gain and limiting currents. The test was terminated at 17,000 hours to determine post test properties. Post free examination indicated that the matrix remained physically intact for the duration of the test.

**Claims**

1. An electrolyte retaining matrix for a fuel cell, the matrix containing silicon carbide and a binder and having a porosity of at least 38%, characterized in that it comprises 80 to 90% by weight of silicon carbide particles and a balance of a polyethersulfone binder comprising at least two thirds, by molecular weight, of the repeating unit

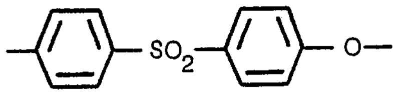

and having an average molecular weight of at least 17000.

2. An electrolyte retaining matrix according to claim 1, characterized in that the polyethersulfone binder consists entirely of the repeating unit

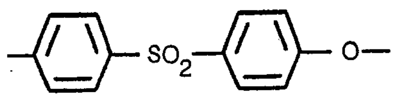

3. An electrolyte retaining matrix according to any of claims 1 or 2, characterized in that said polyethersulfone binder has an average molecular weight of at least 25000.

4. An electrolyte retaining matrix according to any of claims 1 to 3, characterized in that said matrix comprises between 10 and 20% by weight of polyethersulfone binder.

5. An electrolyte retaining matrix according to any of claims 1 to 4, characterized in that the silicon carbide particles are coated with the polyethersulfone binder which is uniformly dispersed throughout said matrix.

**Patentansprüche**

1. Brennstoffzellenelektrolytmatrize bestehend aus Siliziumkarbid und einem Bindemittel und einer Porosität von wenigstens 38 Prozent, dadurch gekennzeichnet dass die Matrize 70 bis 90 Gewichtsprozent Siliziumkarbid Partikel enthält wobei der Rest aus Polyäthersulfon Bindemittel besteht und dieses Bindemittel wenigstens zwei Drittel, mit Bezug auf das Molekulargewicht, der sich wiederholenden Einheit

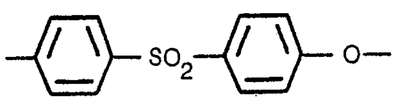

bei einem Durchschnittsmolekulargewicht von wenigstens 17.000 aufweist.

2. Brennstoffzellenelektrolytmatrize nach Anspruch 1, dadurch gekennzeichnet dass das Polyäthersulfon-Bindemittel ganz aus der sich wiederholenden Einheit

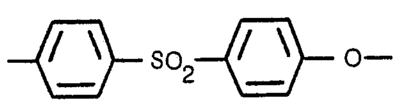

besteht.

3. Brennstoffzellenelektrolytmatrize nach einem der Ansprüche 1 oder 2, dadurch gekennzeichnet dass das Polyäthersulfon-Bindemittel ein Durchschnittsmolekulargewicht von wenigstens 25.000 aufweist.

4. Brennstoffzellenelektrolytmatrize nach einem der Ansprüche 1 bis 3, dadurch gekennzeichnet dass die Matrize etwa 10 bis 20 Gewichtsprozent Polyäthersulfon Bindemittel aufweist.

5. Brennstoffzellenelektrolytmatrize nach einem der Ansprüche 1 bis 4, dadurch gekennzeichnet dass die Siliziumkarbid Partikel mit dem Polyäthersulfon Bindemittel überzogen sind und letzteres gleichmässig durch die Matrize verteilt vorliegt.

**Revendications**

1. Matrice rétentrice d'électrolyte pour pile à combustible, la matrice contenant du carbure de silicium et un liant, et ayant une porosité d'au moins 38%, caracterisee en ce qu'elle comprend 70 à 90% en poids de particules de carbure de silicium at le reste d'un liant polyéthersulfone comprenant au moins deux tiers, en masse moléculaire, de l'unité

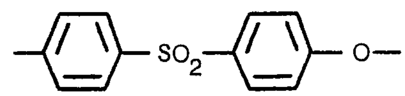

qui se répète et dont la masse moléculaire moyenne est d'au moins 17000.

2. Matrice rétentrice d'électrolyte selon la revendication 1, caracterisee en ce que le liant polyéthersulfone est composé en totalité de l'unité

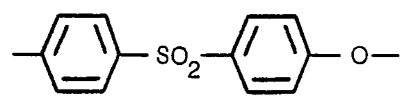

qui se répète.

3. Matrice rétentrice d'électrolyte selon la revendication 1 ou 2, caracterisee en ce que ledit liant polyéthersulfone possède une masse moléculaire d'au moins 25000.

4. Matrice rétentrice d'électrolyte selon l'une quelconque des revendications 1 à 3, caracterisee en ce que ladite matrice comprend entre 10 et 20% en poids de liant polyéthersulfone.

5. Matrice rétentrice d'électrolyte selon l'une quelconque des revendications 1 à 4, caracterisee en ce que les particules de carbure de silicium sont enrobées avec le liant polyéthersulfone qui est dispersé dans toute la matrice de manière uniforme.

FIG. 1

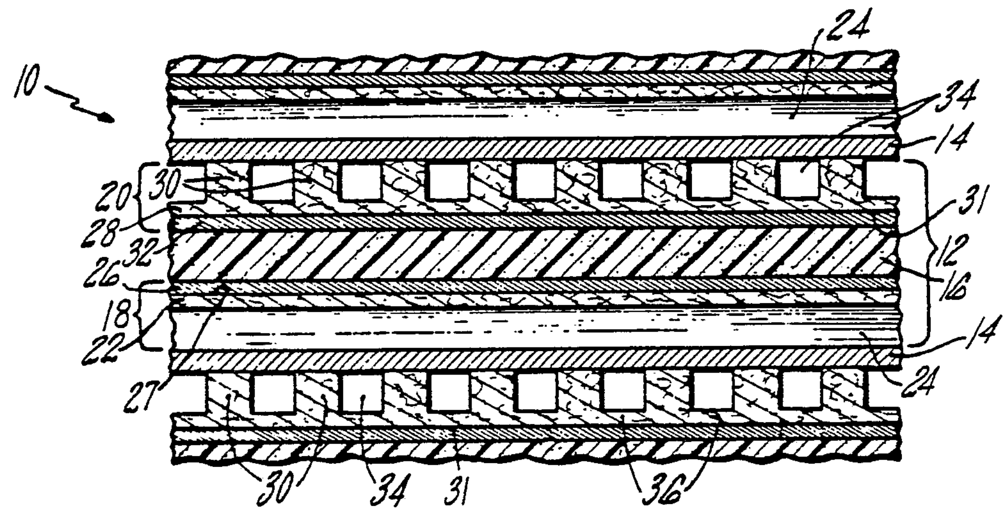
10
24
34
14
20
30
28
32
26
18
22
27
31
12
16
14
24
30
34
31
36

FIG. 2

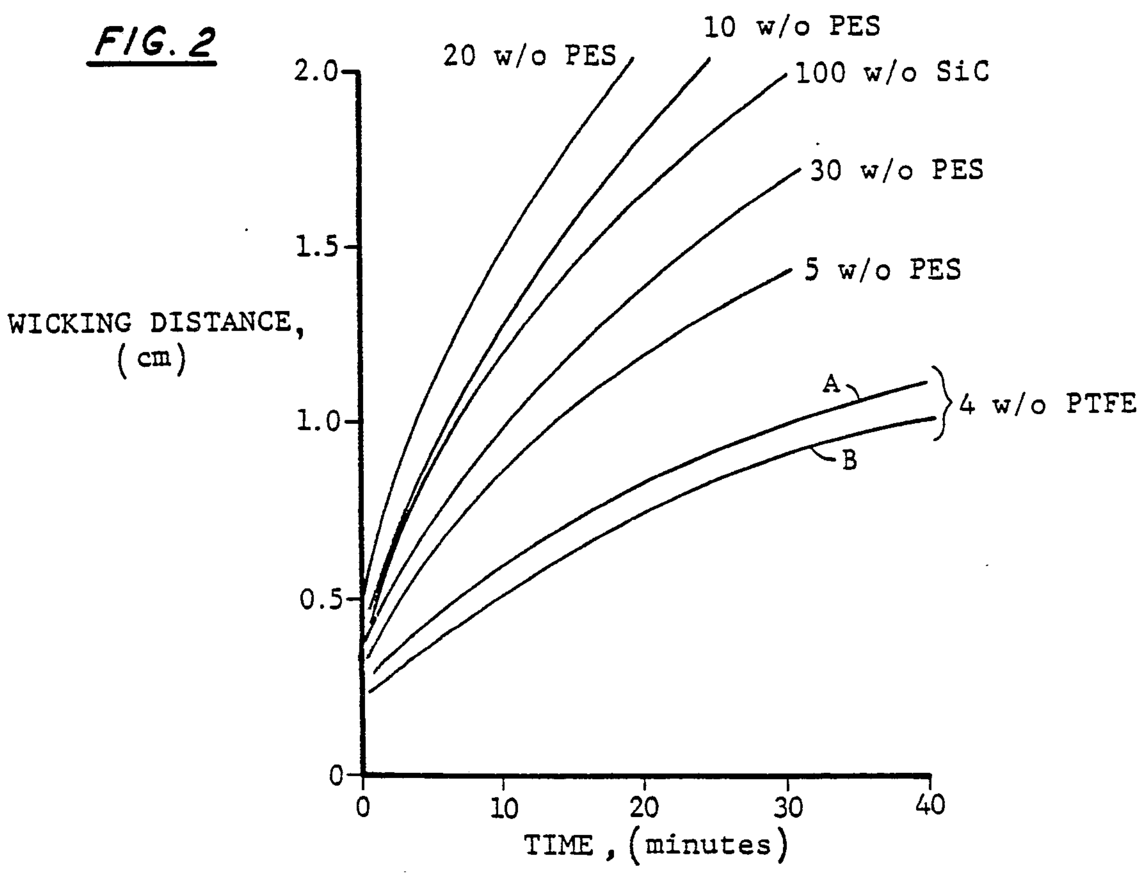
20 w/o PES
10 w/o PES
100 w/o SiC
30 w/o PES
5 w/o PES
A
B
4 w/o PTFE
2.0
1.5
1.0
0.5
0
WICKING DISTANCE, (cm)
0
10
20
30
40
TIME, (minutes)